# EUROPÄISCHE PATENTANMELDUNG

(11) **EP 3 243 633 A1**
(43) Veröffentlichungstag der Anmeldung: **15.11.2017**
(21) Anmeldenummer: 16020439.2
(22) Anmeldetag: 09.11.2016
(51) Int. Cl.: B29C 67/00, B29C 44/34, B29C 44/02, B29K 55/02, B29K 23/00, B29K 25/00, B29K 77/00, B29K 69/00

(54) **3D-DRUCK VON WERKSTÜCKEN MIT ZELLSTRUKTUR, INSBESONDERE AUS KUNSTSTOFF**

(30) Priorität: 10.05.2016 DE 102016005704
(71) Anmelder: Linde Aktiengesellschaft, 80331 München (DE)
(72) Erfinder: Heninger, Rolf, 85635 Höhenkirchen-Siegertsbrunn (DE); Praller, Andreas, 82110 Germering (DE); Szych, Pawel, 81241 München (DE)
(74) Vertreter: Gellner, Bernd

(57) **Zusammenfassung**

Die vorliegende Erfindung betrifft ein Verfahren zur schichtweisen Herstellung, insbesondere zum dreidimensionalen Drucken, eines Formkörper (26), der zumindest zum Teil eine Zellstruktur aufweist besteht, umfassend die Schritte: Erhitzen eines Werkstoffes (21) auf eine Temperatur oberhalb der Phasenübergangstemperatur des Werkstoffes unter Entstehung einer Werkstoffschmelze (24, 27), Auftragen einer Schicht (25) der Werkstoffschmelze, insbesondere durch Extrusion, Aushärten der Schicht zu einer ausgehärteten Schicht, insbesondere bei Umgebungsbedingung, wobei der Werkstoff oder die Werkstoffschmelze mit einem fluiden Treibmittel (22) unter Druck beladen wird, so dass das Treibmittel eine Vielzahl an Gasblasen in der Werkstoffschmelze beim oder nach dem Auftragen ausbildet, und die ausgehärtete Schicht eine Zellstruktur aufweist.

## Beschreibung

Die Erfindung betrifft ein Verfahren und eine Vorrichtung zur schichtweisen Herstellung eines Formkörpers, der zumindest zum Teil eine Zellstruktur aufweist.

Ein solches Verfahren umfasst die Schritte: Erhitzen eines schmelz- bzw. plastifizierbaren Werkstoffes auf eine Arbeitstemperatur unter Entstehung einer Werkstoffschmelze, Auftragen einer Schicht der Werkstoffschmelze, insbesondere durch Extrusion, und Aushärten der Schicht zu einer ausgehärteten Schicht, insbesondere bei Umgebungsbedingung, insbesondere bei Umgebungsdruck und/oder Umgebungstemperatur.

Der 3D-Druck ist ein besonderes Verfahren zur Formgebung von Werkstücken oder Bauteilen, in welchem das zu formende Werkstück oder Bauteil schichtweise hergestellt wird. Typischerweise wird dabei ein thermoplastischer Werkstoff über seine Glasübergangstemperatur erhitzt, und die dabei entstehende Werkstoffschmelze Schicht für Schicht durch einen Druckkopf aufgetragen. Die Werkstoffschmelze härtet üblicherweise unmittelbar nach dem Verlassen des Druckkopfes durch Abkühlung auf die Umgebungstemperatur aus. Da der Druckkopf oder das herzustellende Werkstück in alle drei Raumrichtungen bewegt werden kann, ist es möglich, Werkstücke in nahezu jeder beliebigen Form herzustellen.

Kommerziell erhältliche 3D-Drucker verwenden typischerweise ein polymeres Filament aus beispielsweise Acrylnitril-Butadien-Styrol (ABS) als Baustoff bzw. Werkstoff. Das Filament wird in einer speziellen Kartusche mit einer Spule zur Verfügung gestellt, auf der das Filament aufgewickelt ist. Ist das Filament in der Kartusche aufgebraucht, wird eine neue Kartusche notwendig, ähnlich einer Druckerkartusche eines 2D-Desktop-Tintenstrahldruckers.

Da solche Filamente bisher nur in einer massiven, d.h. nicht-geschäumten Form, verfügbar sind, ist zurzeit nicht möglich, geschäumte Objekte, also Objekte mit Zellstruktur, mittels 3D-Druck herzustellen.

Solche zumindest teilweise geschäumten Werkstücke wären jedoch wünschenswert, da sie neben einem reduzierten Gewicht und einem geringeren Materialbedarf auch noch weitere vorteilhafte Eigenschaften wie, z. B., bessere akustische Isolierung oder eine höhere Steifigkeit oder Flexibilität, aufweisen können.

Vor diesem Hintergrund ist es die der Erfindung zugrunde liegende Aufgabe, ein einfaches und wirtschaftlich sinnvolles Verfahren und eine Vorrichtung zur schichtweisen Herstellung eines Werkstückes bzw. Formkörpers zur Verfügung zu stellen, das zumindest teilweise eine Zellstruktur aufweist.

Diese Aufgabe wird durch ein Verfahren mit den Merkmalen des Anspruchs 1 und eine Vorrichtung mit den Merkmalen des Anspruchs 10 gelöst. Vorteilhafte Ausgestaltungen der Erfindung sind in den entsprechenden Unteransprüchen angegeben und werden nachfolgend beschrieben.

Gemäß Anspruch 1 wird bei dem erfindungsgemäßen Verfahren ein fester Werkstoff auf eine Arbeitstemperatur unter Entstehung einer Werkstoffschmelze erhitzt, die resultierende Werkstoffschmelze in Form einer Schicht aufgetragen, insbesondere durch Extrusion, und die aufgetragene Schicht ausgehärtet, insbesondere bei Umgebungstemperatur und/oder Umgebungsdruck. Dabei ist vorgesehen, dass der Werkstoff oder die Werkstoffschmelze mit einem fluiden Treibmittel unter Druck beladen wird, so dass das Treibmittel eine Vielzahl an Gasblasen in der Werkstoffschmelze beim oder nach dem Auftragen ausbildet, z. B. durch Druckabbau, und die ausgehärtete Schicht eine Zellstruktur aufweist.

Unter einem fluiden Treibmittel wird im Rahmen der vorliegenden Erfindung ein gasförmiges und/oder flüssiges Treibmittel verstanden. Bei dem Treibmittel handelt es sich bevorzugt um z.B. Kohlendioxid (CO₂) oder ein Inertgas wie Stickstoff (N₂) oder ein Edelgas, beispielsweise Helium oder Argon. Das Treibmittel kann weitere Stoffe aufweisen.

Unter dem Begriff Arbeitstemperatur ist im Rahmen der Erfindung insbesondere die Temperatur zu verstehen, ab der der feste Werkstoff in eine fließfähige oder hinreichend erweichte Werkstoffschmelze übergeht, die insbesondere ein schichtweises Auftragen bzw. Extrudieren erlaubt. Die Arbeitstemperatur kann eine Phasenübergangstemperatur des Werkstoffes sein oder darüber liegen. Im Falle eines thermoplastischen Kunststoffes als Werkstoff kann die Arbeitstemperatur auch eine Glasübergangstemperatur sein oder darüber liegen.

Unter dem Begriff Werkstoffschmelze ist im Rahmen der vorliegenden Erfindung insbesondere ein hinreichend erweichter oder fließfähiger Werkstoff zu verstehen, der ein schichtweise Auftragen bzw. Extrudieren erlaubt.

Insbesondere ist erfindungsgemäß vorgesehen, dass der Werkstoff unter Druck mit dem Treibmittel beladen wird und anschließend ebenfalls unter Druck auf die vorgenannte Temperatur oberhalb der Phasenübergangstemperatur erhitzt wird.

Gemäß einer weiteren Ausführungsform der Erfindung ist vorgesehen, dass der Werkstoff vor dem Beladen mit dem Treibmittel getrocknet wird. Dies bietet sich insbesondere bei Werkstoffen an, die z.B. ein hydrophiles Polymer aufweisen.

Gemäß einer weiteren Ausführungsform der Erfindung ist vorgesehen, dass die Beladung des Werkstoffs mit dem fluiden Treibmittel in zumindest einem ersten Behälter erfolgt, wobei der Werkstoff in dem Behälter bei dem im Behälter herrschenden Druck mit dem in den Behälter eingeleiteten Treibmittel kontaktiert wird, so dass dieses insbesondere vom Werkstoff zumindest teilweise aufgenommen wird.

Gemäß einer weiteren Ausführungsform des erfindungsgemäßen Verfahrens ist vorgesehen, dass der mit dem Treibmittel beladene Werkstoff aus dem ersten Behälter entnommen wird und bei Umgebungsdruck in eine Vorrichtung zum Erhitzen des Werkstoffes und Extrudieren der Werkstoffschmelze gegeben wird, beispielsweise ein Druckkopf eines 3D-Druckers, und dort wieder unter Druck erhitzt und extrudiert wird. In der vergleichsweise kurzen Zeit, in der sich der beladene Werkstoff in drucklosem Zustand, d.h. bei Umgebungsdruck befindet, entweicht nur eine unerhebliche Menge des Treibmittels aus dem beladenen Werkstoff. Erst nach dem Auftragen bzw.

Extrudieren entstehen aufgrund des Druckabfalls bei der hohen Temperatur des Werkstoffs die besagten Gasblasen.

Gemäß einer weiteren Ausführungsform der Erfindung ist vorgesehen, dass die Beladung der Werkstoffschmelze mit dem fluiden Treibmittel in zumindest einem weiteren Behälter erfolgt, wobei die Werkstoffschmelze in dem weiteren Behälter bei dem im weiteren Behälter herrschenden Druck mit dem in den weiteren Behälter eingeleiteten Treibmittel kontaktiert wird, so dass dieses insbesondere von der Werkstoffschmelze zumindest teilweise aufgenommen wird.

Der Druck, bei welchem der Werkstoff oder die Werkstoffschmelze mit dem Treibmittel beladen werden, kann dabei an den jeweiligen Werkstoff bzw. der dazu entsprechenden Werkstoffschmelze angepasst werden und erlaubt eine vordefinierte Beladung des Werkstoffs oder der Werkstoffschmelze mit dem fluiden Treibmittel. Das Treibmittel diffundiert dabei vorzugsweise in den Werkstoff oder in die Werkstoffschmelze bzw. wird von diesem oder dieser zumindest teilweise aufgenommen. Man spricht daher auch von einem Imprägnieren des Werkstoffs oder der Werkstoffschmelze mit dem Treibmittel.

Weiterhin ist die vom Werkstoff oder der Werkstoffschmelze aufgenommene Menge an Treibmittel insbesondere abhängig von dem Druck beim Beladen, sowie von der Behandlungszeit, d.h., der Zeitdauer, während der der Werkstoff oder die Werkstoffschmelze mit dem Treibmittel bei dem Druck kontaktiert wird (z.B. in dem vorgenannten ersten Behälter oder weiteren Behälter). Bevorzugt wird der Werkstoff bei einem Druck von mindestens 35 bar für 2 h mit dem Treibmittel beladen.

Der Beladungsdruck und/oder die Beladungsdauer mit dem Treibmittel kann jedoch reduziert werden, beispielsweise auf 20 bar, wenn der Werkstoff nach dem Beladen mit dem Treibmittel unter einer Treibmittelatomsphäre gelagert wird, insbesondere bei einem Druck im Bereich von 4 bar bis 10 bar.

Gemäß einer Ausführungsform der Erfindung ist vorgesehen, dass der Werkstoff einen thermoplastischer Kunststoff, Schokolade oder eine Zuckermasse umfasst oder daraus besteht.

Gemäß einer weiteren Ausführungsform der Erfindung ist vorgesehen, dass der thermoplastische Werkstoff aus der Gruppe umfassend Acrylnitril-Butadien-Styrol (CAS-Nummer 9003-56-9), Polypropylen (CAS-Nummer 9003-07-0), Polyethylen (CAS-Nummer 9002-88-4), Polyamid, insbesondere Nylon, PA 6 (CAS-Nummer 25038-54-4); PA 6.6 (CAS-Nummer 32131-17-2), P6.10 (CAS Nummer 9011-52-3), P6.12 (CAS-Nummer 26098-52-3), PA 11 (CAS-Nummer 25035-04-5) oder PA 12 (CAS-Nummer 24937-16-4), und Polycarbonat ausgewählt ist.

Gemäß einer weiteren Ausführungsform der Erfindung ist vorgesehen, dass der Werkstoff in Form eines Filaments bzw. Drahtes vorliegt.

Gemäß einer weiteren Ausführungsform der Erfindung ist vorgesehen, dass das Treibmittel Kohlendioxid und/oder ein Inertgas wie Stickstoff, Argon oder Helium, umfasst oder daraus besteht.

Gemäß einer weiteren Ausführungsform der Erfindung ist vorgesehen, dass das Treibmittel beim Beladen in einem flüssigen und/oder gasförmigen Zustand ist, oder dass das Treibmittel beim Beladen in einem überkritischen Zustand ist.

Gemäß einer weiteren Ausführungsform der Erfindung ist vorgesehen, dass der Werkstoff oder die Werkstoffschmelze beim Beladen mit dem Treibmittel imprägniert wird, insbesondere bei einem Druck im Bereich von mindestens 5 bar, vorzugsweise zwischen 5 bar und 150, beispielsweise bei 20 bar oder 35 bar.

Gemäß einer weiteren Ausführungsform der Erfindung ist vorgesehen, dass das Treibmittel in die Werkstoffschmelze injiziert bzw. eingespritzt wird, insbesondere bei einem Druck von bis zu 50 bar.

Gemäß einer weiteren Ausführungsform der Erfindung ist vorgesehen, dass die aufgetragene Schicht der Werkstoffschmelze eine Schichtdicke im Bereich von 0,01 mm bis 5 mm aufweist, insbesondere im Bereich von 0,025 mm bis 1,25 mm.

Gemäß einer weiteren Ausführungsform der Erfindung ist vorgesehen, dass der herzustellende Formkörper Bereiche ohne Zellstruktur aufweist, beispielsweise die die sichtbaren Oberflächen bildenden Bereiche des Formkörpers, wobei diese Bereiche in gleicher Weise wie die Bereiche mit Zellstruktur schichtweise extrudiert und ausgehärtet werden, wobei jedoch der dabei verwendete Werkstoff oder die verwendete Werkstoffschmelze nicht mit einem Treibmittel beladen bzw. imprägniert sind.

Gemäß einem weiteren Aspekt der Erfindung wird eine Druckvorrichtung zum dreidimensionalen Drucken eines Formkörpers, der zumindest zum Teil eine Zellstruktur aufweist, zur Verfügung gestellt. Insbesondere ist die besagte Druckvorrichtung zur Durchführung des erfindungsgemäßen Verfahrens geeignet bzw. dazu vorgesehen oder ausgebildet.

Danach weist die Druckvorrichtung auf:
- einen Druckkopf, der dazu ausgebildet ist, einen Werkstoff in Form einer Werkstoffschmelze zu drucken bzw. schichtweise zu extrudieren,
- ein Mittel zum Positionieren des Druckkopf in allen drei Raumrichtungen, insbesondere relativ zum herzustellenden Formkörper,
- einen ersten Behälter zur Aufnahme des Werkstoffes,
- eine Transportvorrichtung zum Transport des Werkstoffes zum Druckkopf, und
- eine Treibmittelquelle zum Bereitstellen eines fluiden Treibmittels, die in Strömungsverbindung mit dem ersten Behälter oder dem Druckkopf steht oder bringbar ist.

Vorzugsweise ist der erste Behälter derart ausgebildet, dass der darin befindliche Werkstoff mit dem Treibmittel beladen und/oder unter eine Treibmittelatmosphäre gehalten werden kann, insbesondere ohne dass es zu wesentlichen Verlusten an Treibmittel kommen kann.

Gemäß einer Ausführungsform der Erfindung ist vorgesehen, dass die Druckvorrichtung eine Platte aufweist, auf welcher der herzustellende Formkörper schichtweise aufgebaut bzw. hergestellt ist. Gemäß einer weiteren Ausführungsform der Erfindung ist vorgesehen, dass das Mittel zum Positionieren des Druckkopf dazu ausgebildet ist, die Platte in x-y-Richtung bewegen zu können und den Druckkopf in z-Richtung.

Gemäß einer weiteren Ausführungsform der Erfindung ist vorgesehen, dass die Druckvorrichtung einen zweiten Behälter zur Aufnahme des Werkstoffs aufweist, wobei die Transportvorrichtung weiterhin dazu ausgebildet ist, den Werkstoff aus dem zweiten Behälter zum Druckkopf zu transportieren. Vorteilhafterweise kann mit einer derart ausgebildeten Druckvorrichtung ein Formkörper hergestellt werden, der neben Bereichen mit Zellstruktur, beispielsweise im Kern des Formkörpers, auch Bereiche ohne Zellstruktur aufweist, beispielsweise Bereiche, die die sichtbaren Oberflächen des Formkörpers bilden.

Gemäß einer weiteren Ausführungsform der Erfindung ist vorgesehen, dass der erste Behälter und/oder der zweite Behälter eine Spule aufweist, auf der der Werkstoff in Drahtform aufgewickelt ist.

Gemäß einer weiteren Ausführungsform der Erfindung ist vorgesehen, dass die Transportvorrichtung einen Motor, insbesondere einen Schrittmotor, und ein durch den Motor antreibares Getriebe, insbesondere einen Schneckengetriebe, umfasst, wobei das Getriebe dazu ausgebildet ist, den Werkstoff in Drahtform von der Spule im ersten Behälter oder im zweiten Behälter zum Druckkopf transportieren zu können.

Gemäß einer weiteren Ausführungsform der Erfindung ist vorgesehen, dass der Druckkopf eine Heizvorrichtung aufweist bzw. umfasst, wobei die Heizvorrichtung dazu ausgebildet ist, den Werkstoff auf eine Arbeitstemperatur (z.B. oberhalb der Phasenübergangstemperatur) unter Entstehung der Werkstoffschmelze zu erwärmen.

Gemäß einer weiteren Ausführungsform der Erfindung ist vorgesehen, dass die Heizvorrichtung innerhalb eines Heizbereiches des Druckkopfes angeordnet ist. Gemäß einer weiteren Ausführungsform der Erfindung ist vorgesehen, dass der Druckkopf einen Mischungsbereich umfasst, der nach dem Heizbereich angeordnet ist, und zwischen dem Heizbereich und dem Mischungsbereich ein Mittel zum Einbringen des fluiden Treibmittels am oder im Druckkopf angeordnet ist, wobei das Mittel insbesondere als eine oder mehrere Düsen ausgebildet ist. Gemäß einer weiteren Ausführungsform der Erfindung ist vorgesehen, dass der Mischungsbereich eine oder mehrere Schikanen aufweist.

Gemäß einer weiteren Ausführungsform der Erfindung ist vorgesehen, dass die Druckvorrichtung einen programmierten oder programmierbaren Mikroprozessor umfasst, der zur Durchführung des erfindungsgemäßen Verfahrens dient.

Weitere Einzelheiten und Vorteile der Erfindung sollen durch die nachfolgende Figurenbeschreibung von Ausführungsbeispielen anhand der Figur erläutert werden.

Es zeigen:
- Fig. 1: eine schematische Darstellung eine Ausführungsform des erfindungsgemäßen Verfahrens;
- Fig. 2: eine schematische Darstellung einer alternativen Ausführungsform des erfindungsgemäßen Verfahrens;
- Fig. 3: eine schematische Darstellung einer Ausführungsform der erfindungsgemäßen Druckvorrichtung; und
- Fig. 4: eine schematische Darstellung einer Druckkopfvariante der erfindungsgemäßen Druckvorrichtung.

### Beispiele:

Um geschäumte Objekte oder Werkstücke 26 mittels 3D-Druck herstellen zu können, ist es erfindungsgemäß vorgesehen, den zur Herstellung des Objekts 26 vorgesehenen Werkstoff, insbesondere einen thermoplastischer Kunststoff, mit einem Treibmittel 22 wie Kohlendioxid zu imprägnieren.

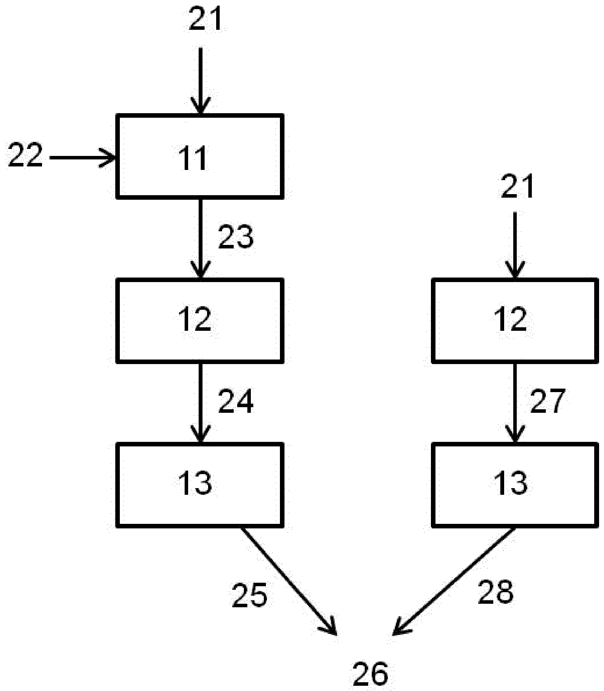

Fig. 1 illustriert eine bevorzugte Verfahrensführung der Erfindung. Ein thermoplastischer Werkstoff 21, insbesondere ABS, wird in einem ersten Behälter 34, beispielsweise einer 3D-Druckerkartusche, mit Kohlendioxid 22 aus einer Kohlendioxidquelle 35 unter Druck beaufschlagt, beispielsweise bei einem Druck von etwa 35 bar für 2 h. Während der Beaufschlagung 11 diffundiert das Treibmittel 22 in den Werkstoff 21 und wird von diesem teilweise aufgenommen. Man spricht daher auch von einem Imprägnieren des Werkstoffes 21 mit dem Treibmittel 22. Alternativ dazu kann der Werkstoff 21 in einem Autoklaven mit dem Treibmittel 22 beaufschlagt werden, und der imprägnierte Werkstoff 23 anschließend in die 3D-Druckerkartusche 34 überführt werden. Vorteilhafterweise ist eine Lagerung des imprägnierten Werkstoffes 23 bei Atmosphärendruck bis zu 2 h nach der Beaufschlagung 11 möglich, ohne das es zum einem signifikanten Verlust des Treibmittels 22 im imprägnierten Werkstoff 23 kommt.

Vorteilhafterweise kann jedoch der imprägnierte Werkstoff 23 aber auch unter einer Treibmittelatmosphäre gelagert werden, wobei in diesem Fall die Beaufschlagung 11 auch bei niedrigeren Drücken durchgeführt werden kann.

Der Werkstoff 21 bzw. der imprägnierte Werkstoff 23 liegt dabei bevorzugt in Form eines Filaments bzw. Drahts, welcher auf eine Spule aufgewickelt ist, und die Spule in der Druckerkartusche 34 vorliegt. Vorteilhafterweise kann somit der imprägnierte Werkstoff 23 einfach in kommerziell erhältlichen 3D-Druckern verwendet werden.

Der imprägnierte Werkstoff 23 wird anschließend zu einem Druckkopf 31 eines 3D-Druckers transportiert, beispielsweise mittels eines Schrittmotors mit Schneckengetriebe. In dem Druckkopf 31 wird der imprägnierte Werkstoff 23 unter hohem Druck auf eine Arbeitstemperatur, insbesondere auf Temperatur oberhalb der Glasübergangtemperatur des Werkstoffes, erhitzt 12 und in eine Werkstoffschmelze 24 überführt, die weiterhin mit dem Treibmittel 22 imprägniert ist. Die imprägnierte Werkstoffschmelze 24 wird anschließend über eine Düse 37 des Druckkopfes 31 kontinuierlich oder tröpfchenweise zu einer Schicht 25 extrudiert 13. Durch den Druckabfall bilden sich mikroskopische Gasblasen des Treibmittels 22 in der Werkstoffschmelze 24, die nach dem Aushärten erhalten bleiben, und somit der extrudierten Schicht 25 eine mikrozelluläre Struktur verleihen. Nach dem Aushärten der Schicht 25 werden weitere Schichte wie oben beschrieben auf diese aufgetragen, bis das gewünschte Werkstück 26 erhalten wird.

Die geschäumten Teile des gewünschten Formkörpers 26 können dabei unerwünschte Eigenschaften wie eine raue Oberfläche aufweisen. In einer Weiterentwicklung des Erfindungsgedanken ist daher vorgesehen, dass die sichtbaren Oberflächen des gewünschten Werkstückes 26 mittels herkömmlicher, nicht mit einem Treibmittel imprägnierten Materialien 21 herstellt werden, beispielsweise ebenfalls ABS, die ebenfalls zu einer Schmelze 27 erhitzt und über den Druckkopf 31 zu einer Schicht extrudiert 28 werden. Die nicht sichtbaren Teile des gewünschten Werkstückes 26 hingegen werden wie oben beschrieben mittels des imprägnierten Werkstoffes 23 schichtweise hergestellt, so dass das resultierende Werksstück 26 glatten Oberflächen und einen geschäumten Kern aufweist.

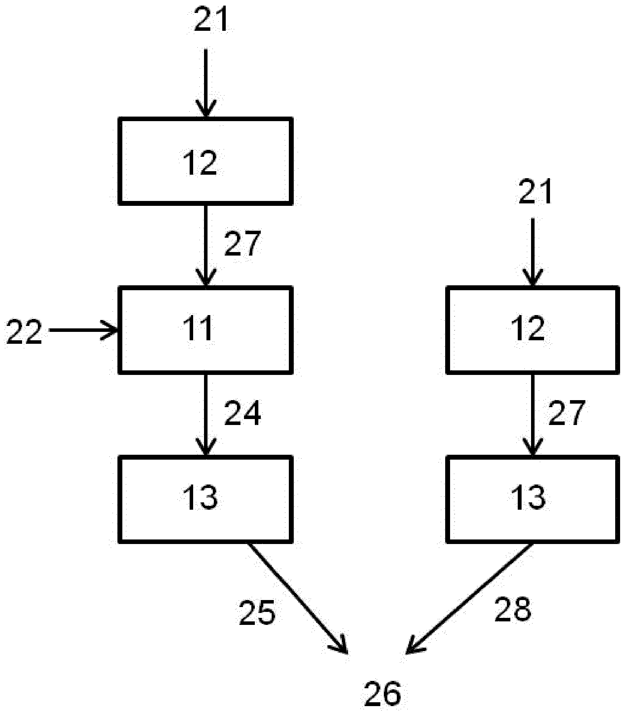

Fig. 2 illustriert eine alternative Verfahrensführung der Erfindung. Hierbei wird nicht der Werkstoff 22 sondern die Werkstoffschmelze 27 mit dem Treibmittel Kohlendioxid 22 unter Druck beladen. Die derart mit dem Treibmittel 22 imprägnierte Werkstoffschmelze 24 wird anschließend über den Druckkopf 31 extrudiert, und eine Schicht 25 aus geschäumtem Material wird erhalten. Auch hierbei wird das gewünschte Werkstück 26 Schicht für Schicht hergestellt. Ebenfalls kann in dieser Verfahrensführung vorteilhafterweise vorgesehen sein, sichtbare Teile des gewünschten Werkstückes 26 mit nicht imprägniertem Werkstoff zu drucken, um so glatte Oberflächen zu erhalten.

Weiterhin kann das Verfahren der Erfindung vorteilhafterweise zur Herstellung von Stützmaterial verwendet, welches beispielsweise insbesondere bei der Herstellung von Wülsten oder Hohlräumen im oder am gewünschten Werkstück benötigt wird, und nach Durchführung des Druckverfahren entfernt wird. Zur leichten Entfernung des Stützmaterials ist dieses vorzugsweise aus einem wasserlöslichen Material.

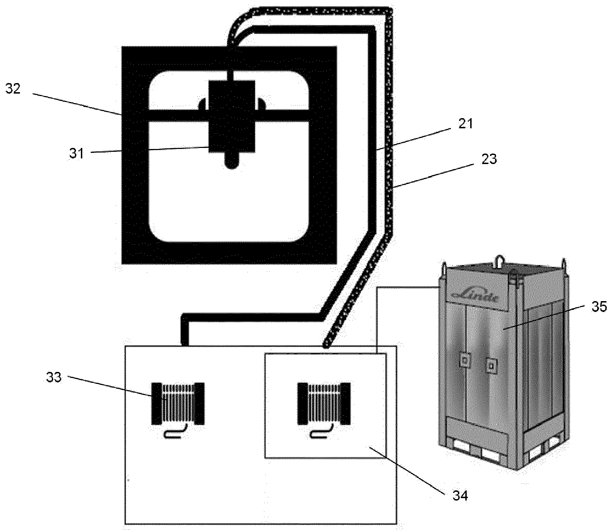

Fig. 3 illustriert eine bevorzugte Vorrichtungsform der Erfindung, mit welcher insbesondere die in Fig. 1 gezeigte bevorzugte Verfahrensführung der Erfindung durchgeführt werden kann. Hierbei handelt es sich um einen 3D-Drucker, der einen Druckkopf 31 und mindestens zwei Druckkartuschen 33, 34 aufweist. Der Druckkopf 31 ist dabei dazu ausgebildet, den Werkstoff zu schmelzen 12 und schichtweise zu extrudieren 13. Die erste Druckkartusche 33 enthält dabei den zur Verwendung vorgesehen Werkstoff in Drahtform, der auf eine Spule aufgewickelt ist. Erfindungsgemäß ist vorgesehen, dass der 3D-Drucker eine zusätzlicher Druckkartusche 34 aufweist, in der auch der Werkstoff in Drahtform auf eine Spule aufgewickelt ist. In dieser Druckkartusche 34 wird ein Treibmittel 22 mit einem Druck von 35 bar eingeleitet, so dass der darin befindliche Werkstoff 21 mit dem Treibmittel 22 imprägniert werden kann. Nach der Imprägnierung 11 wird die zusätzliche Druckerkartusche 34 unter einer Treibmittelatmosphäre gehalten, beispielsweise beim Druck im Bereich von 4 bar bis 10 bar. Dadurch kann der imprägnierte Werkstoff 23 gelagert werden, ohne dass wesentliche Treibmittelverluste im imprägnierten Werkstoff auftreten. Das Treibmittel wird dabei durch eine Treibmittelquelle 35 zur Verfügung gestellt wird, die in Strömungsverbindung mit der zusätzlichen Druckerkartusche 34 steht.

Während des Betriebs des 3D-Druckers besteht nun eine Wahl zwischen den beiden Werkstoffen: Normaler massiver Werkstoff 21 für Standardanwendungen und imprägnierter Werkstoff 23 für geschäumte Werkstücke 26 oder Teile.

Es ist dabei erforderlich, im Voraus festzulegen, welche Teile des gewünschten Werkstückes 26 in geschäumter Form vorliegen sollen und welche Teile in massiver Form. Bei der Herstellung von Teilen in geschäumter Form, berechnet die Steuereinheit des 3D-Druckers die Menge des benötigten, mit dem Treibmittel 22 imprägnierten Werkstoffs 23. Zu Beginn des Druckzyklus liegt in der zusätzlichen Druckerkartusche 34 der Werkstoff 23 imprägniert mit Treibmitteln 22 unter einer Treibmittelatmosphäre vor. Dann wird die zusätzliche Druckpatrone 34 geöffnet und die benötigte Menge an imprägnierten Werkstoff aus der zusätzlichen Druckerpatrone 24 in den Druckkopf 31 geführt, wobei zumindest ein Teil der Treibmittelatmosphäre entweichen kann. Danach wird die zusätzliche Druckerpatrone 34 wieder verschlossen und erneut mit Treibmittel 22 aus der Treibstoffquelle 35 gefüllt.

Alternativ dazu kann die Treibmittelquelle 35 auch in Strömungsverbindung mit dem Druckkopf 31 stehen, wobei der Druckkopf 31 in diesen Falle dazu ausgebildet ist, das Treibmittel 22 in die Werkstoffschmelze 27 injizieren zu können. Dazu sind an oder im Druckkopf 31 eine oder mehrere Düsen angeordnet, über die das Treibmittel 22 in die Werkstoffschmelze 27 injiziert bzw. eingeblasen werden kann.

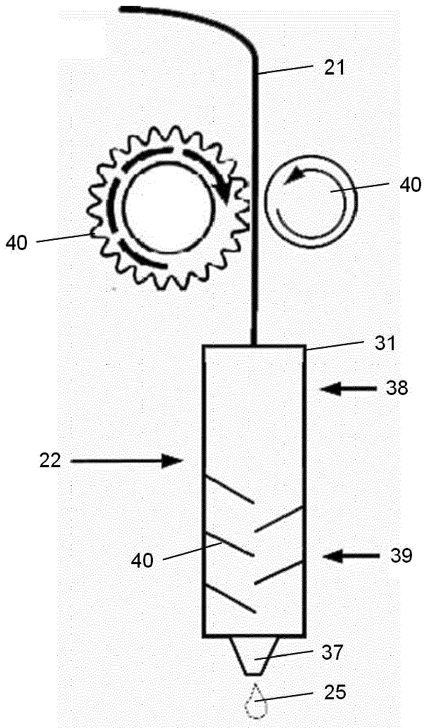

Fig. 4 illustriert einen derartig ausgebildeten Druckkopf 31. Der Druckkopf 31 weist dabei einen Schmelzbereich 38, einen Mischungsbereich 39 und eine Druckkopfdüse 42 auf. Im Schmelzbereich 37 wird der nicht imprägnierter Werkstoff 21 in Form eines Filaments, das über einen Antrieb 36 dem Druckkopf 31 zugeführt wird, auf die Arbeitstemperatur, insbesondere über die Glasübergangstemperatur, zu einer nicht imprägnierten Werkstoffschmelze 27 erwärmt, wobei die Werkstoffschmelze 27 anschließend in den Mischungsbereich geführt wird. Zwischen dem Schmelzbereich 38 und Mischungsbereich 39 sind eine oder mehrere Düsen angeordnet, die dazu ausgebildet sind, das Treibmittel 22 in die nicht imprägnierte Werkstoffschmelze 27 zu injizieren. Dabei löst sich das Treibmittel 22 in der Werkstoffschmelze. In dem Mischungsbereich 39 werden dann die Werkstoffschmelze 27 und das injizierte Treibmittel zu der imprägnierten Werkstoffschmelze 24 vermischt, welche dann über die Druckkopfdüse 37 extrudiert wird, wobei das gelöste Treibmittel 22 nach der Extrusion expandiert und sehr kleine Blasen bzw. Mikroblasen in der extrudierten Werkstoffschmelze 25 bildet, die dann nach dem Aushärten der Werkstoffschmelze die Zellstruktur verursachen bzw. bedingen.

Vorteilhafterweise weist der Mischungsbereich 39 eine oder mehrere Schikanen 40 auf, um eine möglichst vollständige und effiziente Beladung der Werkstoffschmelze 27 mit dem Treibmittel 22 zu gewährleisten.

Die in Fig. 2 illustrierte alternative Verfahrensführung der Erfindung kann vorteilhafterweise mittels des in Fig. 4 dargestellten Druckkopfes 31 durchgeführt werden, wobei der Druckkopf 31 jeweils zum Drucken von geschäumten Teilen und nicht geschäumten Teilen verwendet werden kann des Werkstückes. Alternativ kann der 3D-Drucker zur Durchführung der alternativen Verfahrensführung einen herkömmlichen Druckkopf zum Drucken nicht geschäumter Teile und einen in Fig. 4 dargestellten Druckkopf zum Drucken von geschäumten Teilen des Werkstoffs aufweisen.

**Bezugszeichenliste**

| | |
|---|---|
| 11 | Imprägnieren |
| 12 | Schmelzen |
| 13 | Extrusion |
| | |
| 21 | Thermoplastfilament |
| 22 | Kohlendioxid |
| 23 | Thermoplastfilament imprägniert mit Kohlendioxid |
| 24 | imprägnierte Thermoplastschmelze |
| 25 | extrudierte, aufgeschäumte Thermoplastschmelze |
| 26 | Formkörper mit ungeschäumter Oberfläche und einem geschäumten Kern |
| 27 | nichtimprägnierte Thermoplastschmelze |
| 28 | Extrudierte, ungeschäumte Thermoplastschmelze |
| | |
| 31 | Druckkopf |
| 32 | x-y-z-Achsen-Aktuator |
| 33 | Druckerkartusche mit nicht imprägniertem Filament |
| 34 | Druckerkartusche mit imprägniertem Filament |
| 35 | Kohlendioxidquelle |
| 36 | Antrieb des Druckers |
| 37 | Druckkopfdüse |
| 38 | Schmelzbereich des Druckkopfs |
| 39 | Mischungsbereich des Druckkopfs |
| 40 | Schikane |

## Patentansprüche

1. Verfahren zur schichtweisen Herstellung, insbesondere zum dreidimensionalen Drucken, eines Formkörper (26), der zumindest zum Teil eine Zellstruktur aufweist, umfassend die Schritte:
- Erhitzen (12) eines Werkstoffes (21) auf eine Arbeitstemperatur unter Entstehung einer Werkstoffschmelze (24, 27),
- Auftragen (13) einer Schicht (25) der Werkstoffschmelze (24), insbesondere durch Extrusion,
- Aushärten der Schicht (25) zu einer ausgehärteten Schicht, insbesondere bei Umgebungsbedingungen, vorzugsweise bei Umgebungsdruck und/oder Umgebungstemperatur,
**dadurch gekennzeichnet,**
**dass** der Werkstoff (21) oder die Werkstoffschmelze (27) mit einem fluiden Treibmittel (22) unter Druck beladen (11) wird, so dass das Treibmittel (22) eine Vielzahl an Gasblasen in der Werkstoffschmelze (24) beim oder nach dem Auftragen ausbildet, und die ausgehärtete Schicht eine Zellstruktur aufweist.

2. Verfahren nach Anspruch 1, **dadurch gekennzeichnet, dass** der Werkstoff (21) einen thermoplastischer Kunststoff, Schokolade oder eine Zuckermasse umfasst oder daraus besteht.

3. Verfahren nach Anspruch 2, **dadurch gekennzeichnet, dass** der thermoplastische Kunststoff aus der Gruppe umfassend Acrylnitril-Butadien-Styrol, Polypropylen, Polyethylen, Polyamid, insbesondere Nylon, und Polycarbonat ausgewählt ist.

4. Verfahren nach Anspruch 2 oder 3, **dadurch gekennzeichnet, dass** der Werkstoff (21) in Form eines Filaments vorliegt.

5. Verfahren nach einem der vorherigen Ansprüche, **dadurch gekennzeichnet, dass** das Treibmittel (22) Kohlendioxid oder ein Inertgas umfasst oder daraus besteht.

6. Verfahren nach einem der vorherigen Ansprüche, **dadurch gekennzeichnet, dass** das Treibmittel (22) beim Beladen (11) in einem flüssigen und/oder gasförmigen Zustand ist, oder dass das Treibmittel (22) beim Beladen (12) in einem überkritischen Zustand ist.

7. Verfahren nach einem der vorherigen Ansprüche, **dadurch gekennzeichnet, dass** der Werkstoff (21) oder die Werkstoffschmelze (27) beim Beladen (11) mit dem Treibmittel (22) imprägniert wird, insbesondere bei einem Druck im Bereich von 5 bar bis 150 bar.

8. Verfahren nach einem der Ansprüche 1 bis 7, **dadurch gekennzeichnet, dass** das Treibmittel (22) in die Werkstoffschmelze (27) injiziert wird.

9. Verfahren nach einem der vorherigen Ansprüche, **dadurch gekennzeichnet, dass** die aufgetragene Schicht (25) der Werkstoffschmelze (24) eine Schichtdicke im Bereich von 0,01 mm bis 5 mm aufweist, insbesondere im Bereich von 0,025 mm bis 1,25 mm.

10. Druckvorrichtung zum dreidimensionalen Drucken eines Formkörpers, der zumindest zum Teil eine Zellstruktur aufweist, umfassend:
- einen Druckkopf (31), der dazu ausgebildet ist, einen Werkstoff (21, 23) in Form einer Werkstoffschmelze (24, 27) zu extrudieren,
- ein Mittel (32) zum Positionieren des Druckkopfs (31) in allen drei Raumrichtungen,
- einen ersten Behälter (34) zur Aufnahme des Werkstoffes (23), und
- eine Transportvorrichtung (36) zum Transport des Werkstoffes (21, 23) zum Druckkopf,
**dadurch gekennzeichnet,**
**dass** die Druckvorrichtung weiterhin eine Treibmittelquelle (35) zum Bereitstellen eines fluiden Treibmittels (22) aufweist, die in Strömungsverbindung mit dem ersten Behälter (34) oder dem Druckkopf (31) bringbar ist.

11. Druckvorrichtung nach Anspruch 10, **dadurch gekennzeichnet, dass** die Druckvorrichtung einen zweiten Behälter (33) zur Aufnahme des Werkstoffs (21) aufweist, wobei die Transportvorrichtung (36) weiterhin dazu ausgebildet ist, den Werkstoff (21) aus dem zweiten Behälter zum Druckkopf (31) zu transportieren.

12. Druckvorrichtung nach Anspruch 10 oder 11, **dadurch gekennzeichnet, dass** der erste Behälter (34) und/oder der zweite Behälter (33) eine Spule aufweist, auf welcher der Werkstoff (21, 23) in Drahtform aufgewickelt ist.

13. Vorrichtung nach Anspruch 12, **dadurch gekennzeichnet, dass** die Transportvorrichtung (36) einen Motor, insbesondere einen Schrittmotor, und ein durch den Motor antreibares Getriebe, insbesondere einen Schneckengetriebe umfasst, wobei das Schneckengetriebe dazu ausgebildet ist, den Werkstoff (21, 23) in Drahtform von der Spule im ersten Behälter (34) oder im zweiten Behälter (33) zum Druckkopf (31) zu transportieren.

14. Druckvorrichtung nach einem Ansprüche 10 bis 13, **dadurch gekennzeichnet, dass** der Druckkopf (31) eine Heizvorrichtung aufweist, wobei die Heizvorrichtung dazu ausgebildet ist, den Werkstoff (21, 23) auf eine Temperatur oberhalb der Phasenübergangstemperatur unter Entstehung der Werkstoffschmelze (24, 27) zu erwärmen.

15. Druckvorrichtung nach einem Ansprüche 10 bis 14, **dadurch gekennzeichnet, dass** die Druckvorrichtung dazu konfiguriert ist, das Verfahren nach einem der Ansprüche 1 bis 9 auszuführen, wobei insbesondere die Druckvorrichtung zur Durchführung des Verfahrens einen programmierten oder programmierbaren Mikroprozessor aufweist.
